# EUROPEAN PATENT APPLICATION

(11) **EP 4 742 783 A1**
(43) Date of publication of application: **13.05.2026**
(21) Application number: 23943993.8
(22) Date of filing: 03.07.2023
(51) Int. Cl.: H04W 64/00

(54) **POSITIONING METHOD AND APPARATUS, AND DEVICE, STORAGE MEDIUM AND CHIP**

(71) Applicant: GUANGDONG OPPO MOBILE TELECOMMUNICATIONS CORP., LTD., Dongguan, Guangdong 523860 (CN)
(72) Inventor: HU, Rongyi, Dongguan, Guangdong 523860 (CN)
(74) Representative: Novagraaf Technologies
(86) International application number: PCT/CN2023/105605
(87) International publication number: WO 2025/007259

(57) **Abstract**

Provided is a position method and a positioning apparatus, relating to the technical field of communications. The method is performed by a positioning device. The method includes: positioning (601, 802) a zero-power tag device based on a first radio signal from the zero-power tag device; wherein the first radio signal is actively transmitted by the zero-power tag device in response to the zero-power tag device receiving a second radio signal, or the first radio signal is passively transmitted via backscatter modulation on the second radio signal; wherein the second radio signal is used to energize the zero-power tag device or wake up the zero-power tag device.

## Description

### TECHNICAL FIELD

The present disclosure relates to the technical field of communications, and in particular, relates to a positioning method, and an apparatus, a device, a storage medium, and a chip thereof.

### RELATED ART

With the continuous development of mobile communications technologies, the demand for positioning based on mobile communications is increasing.

In the related arts, positioning may be performed between two terminals over the Internet of things (IoT) or a cellular network. For example, an IoT connection or a cellular network connection is established between two terminals in the IoT and the cellular network establish, and then applications such as absolute positioning, relative positioning, ranging, and direction finding are implemented by receiving and detecting signals over the IoT connection or the cellular network connection.

### SUMMARY

Embodiments of the present disclosure provide a positioning method, and an apparatus, a device, a storage medium and a chip thereof. The technical solutions are as follows.

According to an aspect of the embodiments of the present disclosure, a positioning method is provided. The method is performed by a positioning device. The method includes: positioning a zero-power tag device based on a first radio signal from the zero-power tag device; wherein the first radio signal is actively transmitted by the zero-power tag device in response to receiving a second radio signal, or the first radio signal is passively transmitted via backscatter modulation on the second radio signal; wherein the second radio signal is used to energize the zero-power tag device or wake up the zero-power tag device.

The first radio signal is actively transmitted by the zero-power tag device or passively transmitted by the zero-power tag device via backscatter modulation on the second radio signal in response to the zero-power tag device receiving energy from the second radio signal or being waked up by the second radio signal.

According to an aspect of the embodiments of the present disclosure, a positioning method is provided. The method is performed by a zero-power tag device. The method includes: in response to receiving a second radio signal, actively transmitting a first radio signal, or passively transmitting the first radio signal via backscatter modulation on the second radio signal; wherein the first radio signal is configured for a positioning device to position the zero-power tag device, and the second radio signal is used to energize the zero-power tag device or wake up the zero-power tag device.

According to another aspect of the embodiments of the present disclosure, a positioning apparatus is provided. The apparatus includes: a positioning module, configured to position a zero-power tag device based on a first radio signal from the zero-power tag device; wherein the first radio signal is actively transmitted by the zero-power tag device in response to receiving a second radio signal, or the first radio signal is passively transmitted via backscatter modulation on the second radio signal; wherein the second radio signal is used to energize the zero-power tag device or wake up the zero-power tag device.

According to another aspect of the embodiments of the present disclosure, a positioning apparatus is provided. The apparatus includes: a transmitting module, configured to, in response to receiving a second radio signal, actively transmit a first radio signal, or passively transmit the first radio signal via backscatter modulation on the second radio signal; wherein the first radio signal is configured for a positioning device to position the zero-power tag device, and the second radio signal is used to energize the zero-power tag device or wake up the zero-power tag device.

According to another aspect of the embodiments of the present disclosure, a positioning device is provided. The device includes a processor, a memory, and a transceiver. The memory stores one or more computer programs. The processor, when running the one or more computer programs, causes the positioning device to perform the positioning method performed by the positioning device.

According to another aspect of the embodiments of the present disclosure, a zero-power tag device is provided. The device includes a processor, a memory, and a transceiver. The memory stores one or more computer programs. The processor, when running the one or more computer programs, causes the positioning device to perform the positioning method performed by the zero-power tag device.

According to another aspect of the embodiments of the present disclosure, a computer-readable storage medium is provided. The computer-readable storage medium stores one or more computer programs. The one or more computer programs, when run by a processor, causes the processor to perform the positioning method as described above.

According to another aspect of the embodiments of the present disclosure, a chip is provided. The chip, when running on a communication device, causes the communication device to perform the positioning method as described above.

According to another aspect of the embodiments of the present disclosure, a computer program product is provided. The computer program product includes one or more computer instructions, wherein the one or more computer instructions are stored in a computer-readable storage medium. The one or more computer instructions, when read from the computer-readable storage medium and executed by a processor of a communication device, causes the communication device to perform the positioning method as described above.

According to another aspect of the embodiments of the present disclosure, a computer program is provided. The computer program, when run by a processor of a communication device, causes the communication device to perform the positioning method as described above.

The embodiments of the present disclosure provide a positioning scheme. A zero-power tag device may transmit a first radio signal in response to receiving energy from a second radio signal and/or backscattering the second radio signal, and a positioning device may position the zero-power tag device based on the first radio signal. That is, the zero-power tag device to be positioned only needs to be capable of receiving energy from other radio signals and/or backscattering other radio signals, i.e., emitting a radio signal for positioning, but does not need to support IoT or cellular network access capabilities together with the positioning device. In this way, the energy consumption caused by device positioning, is reduced and the application scenarios of the device positioning are expanded.

### BRIEF DESCRIPTION OF DRAWINGS

For clearer illustration of the technical solutions in the embodiments of the present disclosure, the accompanying drawings required to be used in the description of the embodiments are briefly introduced hereinafter. It is apparent that the accompanying drawings in the description hereinafter are only for some embodiments of the present disclosure, and for those of ordinary skill in the art, other accompanying drawings can be acquired according to the accompanying drawings without creative efforts.
FIG. 1 is a schematic diagram of an architecture of a communication system according to some embodiments of the present disclosure;
FIG. 2 is a schematic diagram of a zero-power communication involved in the present disclosure;
FIG. 3 is a schematic diagram of a backscatter communication involved in the present disclosure;
FIG. 4 is a schematic diagram of energy harvesting involved in the present disclosure;
FIG. 5 is a schematic diagram of a circuit of resistive load modulation involved in the present disclosure;
FIG. 6 is a flowchart of a positioning method according to some embodiments of the present disclosure;
FIG. 7 is a flowchart of a positioning method according to some embodiments of the present disclosure;
FIG. 8 is a flowchart of a positioning method according to some embodiments of the present disclosure;
FIG. 9 is a framework diagram of positioning initiated by a mobile phone;
FIG. 10 is a block diagram of a positioning apparatus according to some embodiments of the present disclosure;
FIG. 11 is a block diagram of a positioning apparatus according to some embodiments of the present disclosure; and
FIG. 12 is a schematic structural diagram of a communication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architectures and service scenarios described in the embodiments of the present disclosure are intended to more clearly illustrate the technical solutions according to the embodiments of the present disclosure and do not constitute a limitation on the technical solutions according to the embodiments of the present disclosure. Persons skilled in the art will appreciate that, with the evolution of network architectures and the emergence of new service scenarios, the technical solutions according to the embodiments of the present disclosure are applicable to address similar technical problems.

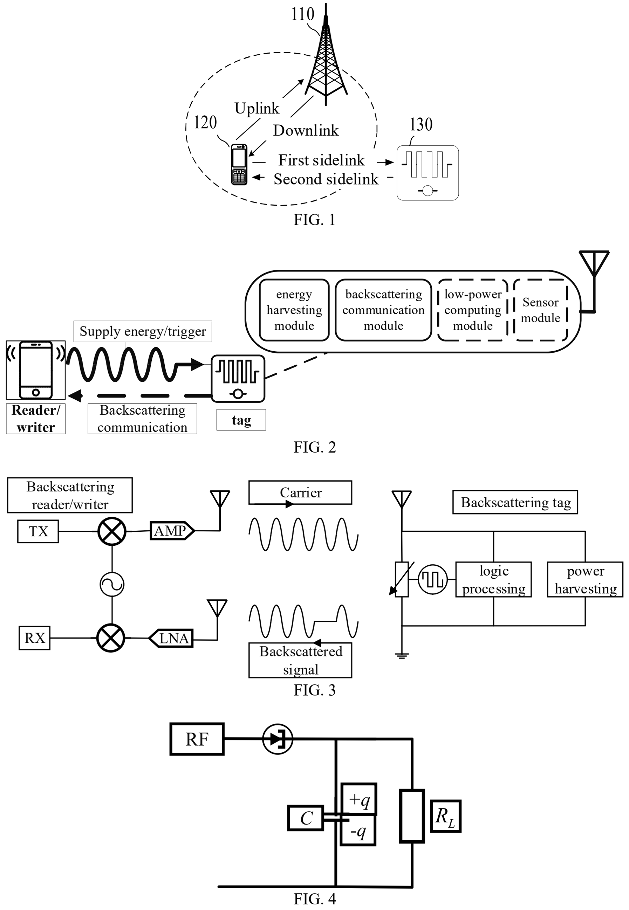

FIG. 1 illustrates a schematic diagram of a communication system according to some embodiments of the present disclosure. The communication system includes a network device 110, a terminal device 120 and a zero-power tag device 130, which are not limited in the present disclosure.

The network device 110 in the present disclosure provides wireless communication functions. The network device includes but not limited to: an evolved Node-B (eNB), a radio network controller (RNC), a Node-B (NB), a base station controller (BSC), a base transceiver station (BTS), a home base station (e.g., a home evolved Node-B , or a home Node-B, HNB), a baseband unit (BBU), an access point (AP) in a wireless fidelity (Wi-Fi) system, a wireless relay node, a wireless backhaul node, a transmission point (TP) or a transmission and reception point (TRP), or the like. It may also be a next generation Node-B (gNB) or a transmission reception point (a TRP or a TP) in a 5^{th} generation (5G) mobile communication system, or one or a set of antenna panels (including a plurality of antenna panels) of a base station in the 5G system, or a network node constituting a gNB or a transmission point, such as a baseband unit (BBU) or a distributed unit (DU) or the like, or a base station in a beyond 5^{th} generation (B5G), a 6^{th} generation (6G) mobile communication system, or the like, or a core network (CN), a fronthaul, a backhaul, a radio access network (RAN), a network slice or the like, or a serving cell, a primary cell (PCell), a primary secondary cell (PSCell), a special Cell (SpCell), a secondary cell (SCell), a neighbor cell, or the like of the terminal device.

The terminal device 120 in the present disclosure is also known as a UE, an access terminal, a user unit, a user station, a mobile station, a mobile terminal, a remote station, a remote terminal, a mobile device, a user terminal, a terminal, a wireless communication device, a user agent, a user device. The terminal includes but is not limited to: a handheld device, a wearable device, an in-vehicle device, an Internet of things device, or the like, such as: a mobile phone, a tablet, an e-book reader, a laptop, a desktop computer, a television, a game console, a mobile Internet device (MID), an augmented reality (AR) terminal, a virtual reality (VR) terminal, and a mixed reality (MR) terminal, a wearable device, a handle, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), a customer premises equipment (CPE), or the like.

The network device 110 and the terminal device 120 communicate with each other using an air interface technology, such as a Uu interface.

In some embodiments, two communication scenarios are present between the network device 110 and the terminal device 120: an uplink communication scenario and a downlink communication scenario. The uplink communication refers to transmitting signals to the network device 110; and the downlink communication refers to transmitting signals to the terminal device 120.

The terminal device 120 and other terminal devices communicate with each other using an air interface technology, such as a PC5 interface.

In some embodiments, two communication scenarios are present between the terminal device 120 and another terminal device: a first sidelink communication scenario and a second sidelink communication scenario. The first sidelink communication refers to transmitting signals to another terminal device; and the second sidelink communication refers to transmitting signals to the terminal device 120.

All of the terminal device 120 and other terminal devices are within a network coverage and located in the same cell; or all of the terminal device 120 and other terminal devices are within the network coverage but located in different cells; or the terminal device 120 is within the network coverage, but other terminal devices are outside the network coverage.

The zero-power tag device 130 is a zero-power device based on radio-frequency identification (RFID).

The zero-power device refers to a device that uses various ambient energies, such as radio frequency energy, light energy, solar energy, thermal energy, mechanical energy, and other ambient energies. Such device may have no energy storage capacity or very limited energy storage capacity (e.g., using capacitors with a capacity of tens of µF).

In some embodiments, zero-power devices may constitute an ambient power-enabled Internet of things (abbreviated as ambient IoT).

The technical solutions according to the embodiments of the present disclosure may be applied to various communication systems, such as: a global system of mobile communication (GSM) system, a code-division multiple access (CDMA) system, a wideband code-division multiple access (WCDMA) system, a general packet radio service (GPRS) system, a long-term evolution (LTE) system, an LTE frequency-division duplex (FDD) system, an LTE time division duplex (TDD) system, an advanced long-term evolution (LTE-A) system, a universal mobile telecommunication system (UMTS), a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN) system, a wireless fidelity (Wi-Fi) system, a cellular Internet of things (IoT) system, a cellular passive Internet of things system, and may also be applied to the subsequent evolution systems of a 5G NR system, and may also be applied to B5G, 6G, and subsequent evolution systems. In some embodiments of the present disclosure, "NR" may also be referred to as a 5G NR system or 5G system. Among them, the 5G mobile communication system may include non-standalone (NSA) and/or standalone (SA).

The technical solutions according to the embodiments of the present disclosure may also be applied to a machine-type communications (MTC), a long-term evolution-machine (LTE-M), a device-to-device (D2D) network, a machine-to-machine (M2M) network, an IoT network, or other networks. The IoT network may include an Internet of vehicles. The communication methods in the Internet of vehicles system are collectively referred to as vehicle-to-X (V2X, X represents anything). For example, the V2X may include: vehicle-to-vehicle (V2V) communications, vehicle-to-infrastructure (V2I) communications, vehicle-to-pedestrian (V2P) communications, vehicle-to-network (V2N) communications, or the like.

Prior to introducing the technical solutions of the present disclosure, some background technologies related to the present disclosure are introduced and explained. The following relevant technologies may be combined with the technical solutions of the embodiments of the present disclosure in any combination as optional solutions, and all of them shall fall within the protection scope of the embodiments of the present disclosure. Embodiments of the present disclosure include at least some of the following contents.

### 1) Communication based on zero-power devices

In recent years, zero-power devices have become more widely used. One of the typical zero-power devices is a zero-power RFID tag device, which utilizes spatial coupling of RF signals to achieve automatic transmission and identification of tag information without contact. RFID tags are also known as "RF tags" or "electronic tags". Based on the different ways of energization, the types of electronic tags are categorized into active electronic tags, passive electronic tags, and semi-passive electronic tags. The active electronic tags, also known as active tags, indicate that operating energy of the electronic tags is provided by batteries. A battery, a memory, and an antenna together constitute an active electronic tag. Different from an activation mode of passive RF, information is transmitted on a defined frequency band prior to replacement of the battery. The passive electronic tags, also known as passive electronics, do not support built-in batteries. When the passive electronic tag approaches a reader/writer, the tag is in a near-field range formed by radiation of an antenna for the reader/writer, an antenna for the electronic tag produces an inductive current via electromagnetic induction, an inductive current drives a chip circuit of the electronic tag, and the chip circuit transmits identification information stored in the tag to the reader/writer over the antenna for the electronic tag. The semi-active electronic tags inherit the advantages of small size, light weight, low price, and long service life of the passive electronic tags. The built-in battery, in absence of reader/writer access, only energizes very few circuits within the chip, and the built-in battery energizes the RFID chip only when the reader/writer is accessed, such that a read and write distance of the tag is extended, and thus reliability of communication is improved.

RFID is a wireless communication technology. The most basic RFID system is composed of two parts: an electronic tag and a reader/writer. The electronic tag consists of coupling components and chips, and each electronic tag has a unique electronic code, which is placed on a target object to be measured to mark the target object. The reader/writer is not only capable of reading information on the electronic tag, but also capable of writing information on the electronic tag, and at the same time provides energy needed for communication to the electronic tag. As illustrated hereinafter, upon entering the electromagnetic field, the electronic tag receives RF signals from the reader/writer. The passive electronic tag or the passive tag transmits the information stored in the electronic tag using the energy acquired by the electromagnetic field generated in space. The reader/writer reads and decodes the information, and thus the electronic tag is identified.

Key techniques of zero-power communication include energy harvesting, backscatter communication, and low-power computing. In the schematic diagram of the zero-power communication illustrated in FIG. 2, a typical zero-power communication system includes a reader/writer and a zero-power device. The reader/writer transmits radio waves to provide energy to the zero-power device. An energy harvesting module deployed in the zero-power device harvests the energy carried by the radio wave in space (FIG. 2 illustrates a radio wave transmitted by the reader/writer) to drive a low-power computing module of the zero-power device and achieve the backscatter communication. Upon acquiring energy, the zero-power device is capable of receiving control commands from the reader/writer and transmitting data to the reader/writer by backscattering based on control signaling. The transmitted data comes from the data stored in the zero-power device (e.g., identification or pre-written information, such as the production date of goods, brand, and manufacturer). The zero-power device may also be equipped with various types of sensors, such that the data acquired by various types of sensors may be reported based on a zero-power mechanism.

Communication based on the zero-power device is referred to as zero-power based communication, which includes the following key techniques.

### Backscatter communication

FIG. 3 illustrates a schematic diagram of backscatter communication. The zero-power device (i.e., a backscatter tag in FIG. 3) receives a carrier signal from a backscatter reader/writer and collects energy by an RF power harvesting module. In this way, the zero-power device supplies energy to a low-power processing module (a logic processing module in FIG. 3), modulates an incoming/interrogation signal, and performs backscatter.

The main features are as follows.
(1) The terminal does not actively transmit signals but achieves backscatter communication by modulating interrogation signals.
(2) The terminal does not rely on a conventional active amplifier transmitter but also uses a low-power computing unit, such that hardware complexity is greatly reduced.
(3) Battery-free communication is achieved in combination with energy harvesting.

### Energy harvesting (RF power harvesting)

FIG. 4 illustrates a schematic diagram of energy harvesting. The spatial electromagnetic wave energy is collected using an RF module by electromagnetic induction, such that load circuits (low-power computing, sensors, or the like) is driven, and thus battery-free communication is achieved.

### Load modulation

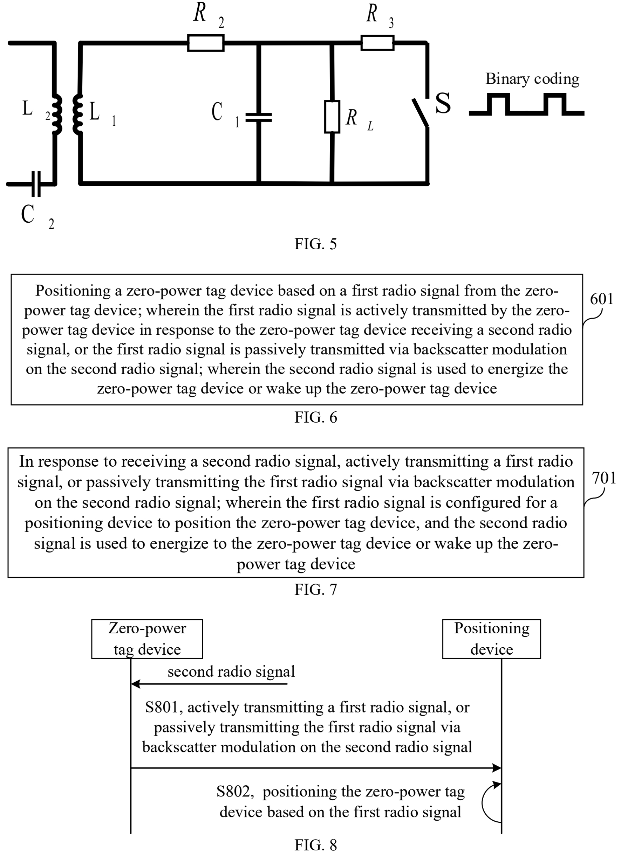

Load modulation is often used by the electronic tag for transmitting data to the reader/writer. The load modulation adjusts an electric parameter of an oscillator circuit of the electronic tag in accordance with the beat of data flow, such that the size and phase of an impedance of the electronic tag are changed accordingly, and thus the modulation is complete. The load modulation mainly includes resistive load modulation and capacitive load modulation. In the resistive load modulation, the load is connected in parallel with a resistor, referred to as a load modulation resistor, the resistor is turned on and off based on a clock of the data flow, and turn-on or turn-off of a switch S is controlled by binary data coding. The circuit schematic of the resistive load modulation is illustrated in FIG. 5.

### Coding

For data transmitted by the electronic tag, binary digits "1" and "0" may be represented by using different forms of codes. An RFID system usually uses one of: non-return zero (NRZ) coding, Manchester coding, unipolar return zero (URZ) coding, differential binary phase (DBP) coding, Miller coding, or differential coding. In essence, binary digits "1" and "0" are represented by different pulse signals.

### 2) Energy harvesting signal and trigger signal in zero-power communication system

### Energy harvesting signal

The carrier of the energy harvesting signal is a base station, a smart phone, a smart gateway, a charging station, or a micro base station.

Regarding the frequency band, radio waves used for energy harvesting are low-frequency waves, medium-frequency waves, or high-frequency waves.

Regarding the waveform, radio waves used for energy harvesting are sine waves, square waves, triangular waves, pulses, or rectangular waves.

In addition, the radio waves are continuous waves or non-continuous waves (i.e., with a specific amount of temporal interruption).

The energy harvesting signal is one of signals specified in the 3GPP standard, such as a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), or a physical broadcast channel (PBCH).

### Trigger signal

The carrier of the energy harvesting signal is a base station, a smart phone, or a smart gateway.

In terms of frequency band, radio waves used for energy harvesting are low-frequency waves, medium-frequency waves, or high-frequency waves.

In terms of waveform, radio waves used for energy harvesting are sine waves, square waves, triangular waves, pulses, or rectangular waves.

In addition, the radio waves are continuous waves or non-continuous waves (i.e., with a specific amount of temporal interruption).

The trigger signal is one of the signals specified in the 3GPP standard, such as an SRS, a PUSCH, a PRACH, a PUCCH, a PDCCH, a PDSCH, a PBCH, or a new signal.

### 3) Cellular passive IoT

With the increase of applications in the 5G industry, more and more types of connection objects and application scenarios are present, and thus requirements on the price and power consumption of communication terminals are higher. The application of battery-free and low-cost IoT devices becomes a key technology for cellular IoT, such that the type and number of linked terminals of the 5G network are increased, and thus Internet of everything is truly achieved. Passive IoT devices may be based on existing zero-power devices, such as RFID technology, and extended to accommodate the cellular IoT.

FIG. 6 illustrates a flowchart of a positioning method according to some embodiments of the present disclosure. This method may be performed by a positioning device, wherein the positioning device may be the terminal device 120 in the network architecture illustrated in FIG. 1. The method may include the following process.

In process 601, the positioning device positions a zero-power tag device based on a first radio signal from the zero-power tag device; wherein the first radio signal is actively transmitted by the zero-power tag device in response to the zero-power tag device receiving a second radio signal, or the first radio signal is passively transmitted via backscatter modulation on the second radio signal. The second radio signal is used to energize the zero-power tag device or wake up the zero-power tag device.

In some embodiments, the zero-power tag device is a device that transmits signals based on RFID.

For the principle of the zero-power tag device transmitting the first radio signal in response to receiving energy from the second radio signal, reference may be made to FIG. 4. For the principle of the zero-power tag device transmitting the first radio signal in a case of backscattering the second radio signal, reference may be made to FIG. 3.

In summary, in embodiments of the present disclosure, in response to receiving energy from the second radio signal or being waked up by the second radio signal, the zero-power tag device actively transmits the first radio signal or passively transmits the first radio signal via backscatter modulation on the second radio signal, such that the positioning device may position the zero-power tag device over the first radio signal. During the above processes, because the zero-power tag device transmits the first radio signal by using energy from the second radio signal or by backscattering the second radio signal, power consumption of the device is saved, and application scenarios of positioning is expanded.

FIG. 7 illustrates a flowchart of a positioning method according to some embodiments of the present disclosure. This method may be performed by a zero-power tag device, wherein the zero-power tag device may be the zero-power tag device 130 in the network architecture illustrated in FIG. 1. The method may include the following process.

In process 701, in response to receiving a second radio signal, the zero-power tag device actively transmits a first radio signal, or passively transmits the first radio signal via backscatter modulation on the second radio signal; wherein the first radio signal is configured for a positioning device to position the zero-power tag device, and the second radio signal is used to energize the zero-power tag device or wake up the zero-power tag device.

In summary, in embodiments of the present disclosure, in response to receiving energy from the second radio signal or being waked up by the second radio signal, the zero-power tag device actively transmits the first radio signal or passively transmits the first radio signal via backscatter modulation on the second radio signal, such that the positioning device may position the zero-power tag device over the first radio signal. During the above processes, because the zero-power tag device transmits the first radio signal by using energy from the second radio signal or by backscattering the second radio signal, power consumption of the device is saved, and application scenarios of positioning is expanded.

FIG. 8 illustrates a flowchart of a positioning method according to some embodiments of the present disclosure. This method may be interactively performed by a positioning device and a zero-power tag device. The positioning device may be the terminal device 120 in the network architecture illustrated in FIG. 1, and the zero-power tag device may be the zero-power tag device 130 in the network architecture illustrated in FIG. 1. The method may include the following processes.

In process 801, in response to receiving a second radio signal, the zero-power tag device actively transmits a first radio signal, or passively transmits the first radio signal via backscatter modulation on the second radio signal, wherein the second radio signal is used to energize the zero-power tag device or wake up the zero-power tag device.

The zero-power tag device's behavior of actively transmitting the first radio signal or passively transmitting the first radio signal via backscatter modulation on the second radio signal in response to receiving the second radio signal may be triggered by a radio signal transmitted by another device other than the zero-power tag device.

In some embodiments, the second radio signal is further used to trigger the zero-power tag device to transmit the first radio signal.

In the above embodiments, the radio signal used to trigger the zero-power tag device's behavior of actively transmitting the first radio signal or passively transmitting the first radio signal via the backscatter modulation on the second radio signal in response to receiving the second radio signal may be the second radio signal itself.

For example, in response to receiving energy from a radio signal, in a case where the zero-power tag device detects that the radio signal supplying energy is the second radio signal, the zero-power tag device may determine that the zero-power tag device has received a trigger signal for transmitting the first radio signal configured for positioning. In this case, the zero-power tag device may modulate and transmit the first radio signal configured for positioning the zero-power tag device in response to receiving energy from the second radio signal.

For another example, in a case of backscattering the second radio signal, in a case where the zero-power tag device detects that the radio signal supplying energy is the second radio signal, the zero-power tag device may determine that the zero-power tag device has received a trigger signal for transmitting the first radio signal configured for positioning. In this case, the zero-power tag device may modulate and transmit the first radio signal configured for positioning the zero-power tag device by backscattering the second radio signal.

In the above solutions, the second radio signal serves as the radio signal for supplying energy to the zero-power tag device, or not only serves as the radio signal backscattered by the zero-power tag device, but also triggers the zero-power tag device to transmit the first radio signal configured for positioning the zero-power tag device, such that signaling resources used to trigger the zero-power tag device to transmit the first radio signal are saved, and thus resource utilization during the positioning process is improved.

The aforementioned scheme of detecting that the energy-supplying radio signal is the second radio signal may include at least one of the following.
1) The zero-power tag device parses information in the second radio signal. In a case where the second radio signal carries trigger information for transmitting the first radio signal (for example, the trigger information may be one trigger bit, such as bit 0 or bit 1), the detected energy-supplying radio signal is determined to be the second radio signal.
2) The zero-power tag device parses a frequency of the second radio signal. In a case where the frequency of the second radio signal is a frequency used to trigger the transmission of the first radio signal, the detected energy-supplying radio signal is determined to be the second radio signal.

In some embodiments, the first radio signal is transmitted in a case where the zero-power tag device receives a third radio signal used to trigger the transmission of the first radio signal, and receives energy from the second radio signal and/or backscatters the second radio signal.

In the aforementioned embodiments, the radio signal used to trigger the zero-power tag device to actively transmit the first radio signal or passively transmit the first radio signal via backscatter modulation on the second radio signal in response to receiving the second radio signal may be another radio signal other than the second radio signal.

For example, prior to receiving energy from a radio signal, in a case where the zero-power tag device receives a third radio signal, the zero-power tag device may determine that the zero-power tag device has received the trigger signal for transmitting the first radio signal configured for positioning. Subsequently, in response to receiving energy from the second radio signal, the zero-power tag device may modulate and transmit the first radio signal for positioning the zero-power tag device.

For another example, prior to backscattering the second radio signal, in a case where the zero-power tag device receives the third radio signal, the zero-power tag device may determine that the zero-power tag device has received the trigger signal for transmitting the first radio signal for positioning. Subsequently, the zero-power tag device may modulate and transmit the first radio signal for positioning the zero-power tag device by backscattering the second radio signal.

In the above solutions, the third radio signal other than the second radio signal is used to trigger the zero-power tag device to transmit the first radio signal for positioning the zero-power tag device. This third radio signal may be transmitted by the device that transmits the second radio signal or by a device other than the device that transmits the second radio signal, thereby increasing the flexibility of triggering the zero-power tag device to transmit the first radio signal.

The above-mentioned scheme for determining reception of the third radio signal may include at least one of the following.
1) The zero-power tag device parses information in the received radio signal. In a case where the received radio signal carries trigger information for transmitting the first radio signal (for example, the trigger information may be one trigger bit, such as bit 0 or bit 1), then the device determines that the third radio signal has been received.
2) The zero-power tag device parses a frequency of the received radio signal. In a case where the frequency of the received radio signal is a frequency used to trigger the transmission of the first radio signal, then the device determines that the third radio signal has been received.

In some embodiments, the positioning device is an initiating positioning device, wherein the initiating positioning device is used to initiate positioning of the zero-power tag device; or the positioning device is one of at least one intermediate device, wherein the intermediate device is used to assist the initiating positioning device in positioning the zero-power tag device, the initiating positioning device being used to initiate positioning of the zero-power tag device.

In the embodiments of the present disclosure, the device that positions the zero-power tag device based on the first radio signal from the zero-power tag device may be the initiating positioning device that initiates positioning of the zero-power tag device. That is, upon initiating positioning of the zero-power tag device, the initiating positioning device may independently acquire the first radio signal from the zero-power tag device and position the zero-power tag device based on the first radio signal from the zero-power tag device. In the above solution, the initiating process and the positioning process for positioning the zero-power tag device may be performed by the same device, thereby ensuring positioning convenience.

Alternatively, the device that positions the zero-power tag device based on the first radio signal from the zero-power tag device may be the intermediate device other than the initiating positioning device. That is, during the positioning process, the initiating positioning device initiates positioning of the zero-power tag device, and the intermediate device other than the initiating positioning device acquires the first radio signal from the zero-power tag device and positions the zero-power tag device based on the first radio signal from the zero-power tag device. In the above solution, the initiating process and the positioning process for positioning the zero-power tag device may be performed by different devices, thereby ensuring flexibility in positioning.

In some embodiments, the device transmitting the second radio signal includes at least one of a positioning device, at least one radio signal transmitting device other than the positioning device, or the positioning device and at least one radio signal transmitting device other than the positioning device.

In the above embodiments, during positioning using the zero-power tag device, the device that supplies power to the zero-power tag device and/or provides backscattered radio signal to the zero-power tag device may be the positioning device, the at least one radio signal transmitting device other than the positioning device, or both the positioning device and the at least one radio signal transmitting device other than the positioning device.

In some embodiments of the present disclosure, the positioning device positioning the zero-power tag device may actively transmit the second radio signal, such that the zero-power tag device is enabled to transmit the first radio signal for positioning by radio signal energization or backscatter, thereby eliminating the need for additional devices, and ensuring positioning convenience. Alternatively, another device may transmit the second radio signal, thereby ensuring flexibility in the zero-power tag device's ability to transmit the first radio signal configured for positioning. Alternatively, the positioning device and another device may transmit the second radio signal together, thereby ensuring a high success rate for the zero-power tag device transmitting the first radio signal configured for positioning.

For example, during positioning of the zero-power tag device, the second radio signal may be transmitted by the initiating positioning device, by one or more intermediate devices, or by both the initiating positioning device and one or more intermediate devices.

In a case where the one or more intermediate devices are required to transmit the second radio signal, the initiating positioning device may trigger the one or more intermediate devices to transmit the second radio signal when initiating positioning. For example, the initiating positioning device may transmit an assistance request signal to the one or more intermediate devices. In response to receiving the assistance request signal, the one or more intermediate devices may transmit the second radio signal based on the assistance request signal.

In some embodiments, the assistance request signal is used to indicate a transmission scheme for the second radio signal, such as a protocol type, a signal type, a carrier frequency, a period, a time point, or the like, for transmitting the second radio signal.

Alternatively, in a case where the one or more intermediate devices are required to transmit the second radio signal, the one or more intermediate devices may actively transmit the second radio signal. For example, the one or more intermediate devices may actively transmit the second radio signal based on a preconfigured transmission scheme for the second radio signal. The preconfigured transmission scheme for the second radio signal may include the protocol type, the signal type, the carrier frequency, the period, the time point, or the like, for transmitting the second radio signal.

In some embodiments, the second radio signal includes a first carrier signal or a plurality of second carrier signals, wherein the plurality of second carrier signals are transmitted by a same device, or the plurality of second carrier signals are transmitted respectively by a plurality of devices.

That is, the second radio signal may include: a single first carrier signal, or a consecutively transmitted first carrier signal, or a periodically transmitted first carrier signal, or a plurality of second carrier signals transmitted by the same device, or a plurality of second carrier signals transmitted respectively by a plurality of devices.

In the above embodiments, the second radio signal may be a carrier signal transmitted once/consecutively/periodically by a single device (such as the initiating positioning device or one intermediate device), or a carrier signal transmitted a plurality of times by a single device (such as the initiating positioning device or one intermediate device), or carrier signals transmitted respectively by a plurality of devices (such as a plurality of intermediate devices, or the initiating positioning device and one or more intermediate devices), thus expanding the implementation schemes for transmitting the second radio signal.

In some embodiments, the plurality of second carrier signals differ in at least one of: a transmission time, a frequency, or a transmission period.

In the above embodiments, in a case where the second radio signal includes a plurality of carrier signals, the transmission time, frequency, and transmission period of the plurality of carrier signals may be different, thereby ensuring that the zero-power tag device receives or performs backscatter at different times, frequencies, or transmission periods, improving the success rate of transmission of the first radio signal transmission, and improving the success rate of positioning.

Alternatively, the transmission time, frequency, and transmission period of the plurality of second carrier signals may be the same.

In some embodiments, the first radio signal includes at least one of a single third carrier signal or a plurality of fourth carrier signals, wherein the plurality of fourth carrier signals are transmitted consecutively or periodically.

That is, the first radio signal may include at least one of a single third carrier signal, a fourth carrier signal transmitted for a plurality of times, a fourth carrier signal transmitted consecutively, or a fourth carrier signal transmitted periodically.

In the above embodiments, the zero-power tag device may transmit a carrier signal as the first radio signal once or a plurality of times; or the zero-power tag device may consecutively transmit a carrier signal as the first radio signal; or the zero-power tag device may periodically transmit a carrier signal as the first radio signal, such that the implementation schemes for transmitting the first radio signal are expanded.

In some embodiments, the plurality of fourth carrier signals have different frequencies. Alternatively, the plurality of fourth carrier signals have same frequencies.

In the above embodiments, in a case where the zero-power tag device transmits, for multiple times or periodically, the fourth carrier signal as the first radio signal, the zero-power tag device may transmit the fourth carrier signal at different frequencies, thereby ensuring that the first radio signal is detected and acquired by the positioning device at different frequencies, improving the accuracy of detection and reception of the first radio signal and ensuring the success rate of positioning.

In some embodiments, at least one of the first radio signal or the second radio signal is a radio signal transmitted over sidelink communication.

In the above embodiments, at least one of the initiating positioning device or the intermediate device may transmit the second radio signal over sidelink communication. The zero-power tag device may transmit the first radio signal over sidelink communication; alternatively, the zero-power tag device may transmit the first radio signal over other communication other than sidelink communication/communication protocol standard (e.g., an IoT protocol standard). In the above solutions, devices participating in positioning may transmit at least one of the first radio signal or the second radio signal based on the sidelink communication method used for terminal-to-terminal communication, thereby avoiding unnecessary impact on cellular network communications or other wireless communications.

In some other embodiments, at least one of the initiating positioning device or the intermediate device may transmit the second radio signal based on other communication protocol standards (e.g., based on an IoT protocol standard).

In process 802, the positioning device positions the zero-power tag device based on the first radio signal from the zero-power tag device.

Positioning the zero-power tag device based on the first radio signal from the zero-power tag device may refer to positioning the zero-power tag device based on received information of the first radio signal (e.g., a signal strength, an angle of arrival, a time difference of arrival, or the like, of the received first radio signal).

In some embodiments, the first radio signal may include identification information of the zero-power tag device, thereby enabling the positioning device to selectively position the zero-power tag device.

For example, in a case where a plurality of zero-power tag devices are present within a space and all of the plurality of zero-power tag devices are transmitting first radio signals, a plurality of users may use a plurality of positioning devices to position different zero-power tag devices. In this case, a positioning device only needs to locate one of the plurality of zero-power tag devices, but the positioning device may receive first radio signals from a plurality of zero-power tag devices at the same time. In this case, the positioning device may determine, based on an identifier in the first radio signal, whether the first radio signal is the first radio signal transmitted by the zero-power tag device that the positioning device tries to position. If the first radio signal is the first radio signal transmitted by the zero-power tag device that the positioning device tries to position, the positioning device positions the zero-power tag device based on the received information of the first radio signal.

In some embodiments, the process of positioning the zero-power tag device based on the first radio signal from the zero-power tag device may include: calculating a relative position between the zero-power tag device and the positioning device based on the first radio signal from the zero-power tag device and a predetermined positioning algorithm.

The relative position between the zero-power tag device and the positioning device may refer to at least one of a distance between the zero-power tag device and the positioning device, or a relative direction (or a relative angle) between the zero-power tag device and the positioning device.

The relative direction/relative angle refers to the direction/angle of the zero-power tag device relative to the positioning device, or the direction/angle of the positioning device relative to the zero-power tag device. For example, the zero-power tag device is located 30° north-east of the positioning device.

In the above embodiments, based on the first radio signal from the zero-power tag device, the positioning device may calculate the relative position between the zero-power tag device and the positioning device using a positioning algorithm. The distance at which the RFID device is triggered to transmit the first radio signal is typically short. The solutions according to the embodiments of the present disclosure may be applied to determine the position of the zero-power tag device using mobile devices such as mobile phones, or smart home devices with fixed positions such as smart speakers.

For example, a user may use a mobile phone to search for a zero-power tag device (e.g., a TV remote control). In this case, the relative position between the mobile phone and the TV remote control is determined using the solutions described in the above embodiments. That is, the position of the TV remote control may be determined based on the current position of the mobile phone, thereby enabling quick search of the TV remote control.

For another example, a user may use a mobile phone to trigger an intermediate device (e.g., a smart speaker) to search for a zero-power tag device (e.g., a TV remote control). In this case, a relative position between the smart speaker and the TV remote control is determined using the solution described in the above embodiments. That is, the position of the TV remote control may be determined based on the current position of the smart speaker, thereby enabling quick search of the TV remote control.

In some embodiments, the positioning algorithm includes at least one of a ranging algorithm based on a signal strength, an angle measurement algorithm based on a signal angle of arrival and a signal angle of departure, a positioning algorithm based on a signal phase difference, or a positioning algorithm based on a signal time difference of arrival.

In some embodiment of the present disclosures, the above-mentioned ranging algorithm based on the signal strength may refer to the positioning device detecting the signal strength of the received first radio signal (which may be referred to as a received signal strength, such as a received signal strength indication (RSSI) or a received signal strength (RSS)), and calculating the distance between the zero-power tag device and the positioning device based on the signal strength when the zero-power tag device transmits the first radio signal (which may be referred to as a transmitted signal strength), an attenuation rate of the first radio signal propagating in space (e.g., represented by a signal strength attenuation value per unit distance) and a difference between the received signal strength and the transmitted signal strength.

The aforementioned angle measurement algorithm based on the signal angle of arrival and the signal angle of departure may refer to the positioning device measuring a direction of arrival of the first radio signal and calculating the relative direction/angle between the zero-power tag device and the positioning device based on the measured direction of arrival.

The aforementioned positioning algorithm based on the signal phase difference may refer to that: a positioning device is provided with two or more antennas, with these two or more antennas being separated by a certain distance; for a same radio signal from the zero-power tag device, phases of the radio signals received by these two antennas will differ to a certain extent; and based on the phase difference between the radio signals received by these two antennas, a relative position (distance and/or relative direction) between the zero-power tag device and the positioning device may be calculated. For example, the aforementioned positioning algorithm based on the signal phase difference may be a phase difference of arrival (PDOA) algorithm. Alternatively, the aforementioned positioning algorithm based on signal phase difference may be that the first radio signal includes two radio signals of different frequencies transmitted by the zero-power tag device, and the positioning device measures a phase difference between these two radio signals of different frequencies, and calculates a phase position of the zero-power tag device.

The aforementioned positioning algorithm based on the signal time difference of arrival (TDOA) may refer to acquiring a difference between the time when a same radio signal from the zero-power tag device reaches two or more signal receiving devices (the aforementioned positioning device), and determining the relative position between the zero-power tag device and the positioning device, such as a TDOA algorithm. Alternatively, the aforementioned positioning algorithm based on the signal time difference of arrival may refer to acquiring a time difference between the time when a same radio signal from the zero-power tag device reaches two antennas at different locations within the positioning device, and determining a distance between the zero-power tag device and the positioning device based on this time difference.

In some embodiments, calculating the relative position between the zero-power tag device and the positioning device based on the first radio signal from the zero-power tag device and the predetermined positioning algorithm includes: calculating the relative position between the zero-power tag device and the positioning device based on the first radio signal, the positioning algorithm, and position information of the positioning device.

In the above embodiments, the position information of the positioning device may be absolute position information, such as the current coordinates of the positioning device in the indoor space system, or the current geographic coordinates of the positioning device.

Alternatively, the position information of the positioning device may be relative position information, such as the position information of the positioning device including the relative position relationship between two or more position points of the positioning device at different times. For example, the position information of the positioning device includes the relative distance and/or relative direction between the two or more position points, or the position information of the positioning device includes the relative coordinates of two or more position points (e.g., the coordinates of other position points determined with one position point as the origin).

In the above embodiments, based on the first radio signal and the positioning algorithm, combined with the position of the positioning device itself, the accuracy of determining the relative position between the zero-power tag device and the positioning device is further improved.

In some embodiments, the position information of the positioning device is acquired using at least one of a machine vision positioning algorithm or an inertial navigation positioning algorithm.

In some embodiments, the positioning device may receive the first radio signal from the zero-power tag device.

The positioning device may autonomously receive the first radio signal from the zero-power tag device, thereby positioning the zero-power tag device based on reception information of the first radio signal (e.g., the signal strength, the angle of arrival, the time difference, or the like).

Alternatively, the positioning device may acquire the first radio signal received by other devices and transmitted by the zero-power tag device. For example, in a case where reception information of the first radio signal received by a plurality of devices is required for positioning, in addition to the positioning device itself receiving the first radio signal and acquiring reception information of the first radio signal received by the positioning device, the positioning device also needs to acquire reception information of the first radio signal received by the other devices.

In some embodiments, the initiating positioning device may transmit a trigger signal to the intermediate device, wherein the trigger signal may be used to instruct the zero-power tag device to position the zero-power tag device based on the first radio signal. Accordingly, in a case where the positioning device is the intermediate device, positioning the zero-power tag device based on the first radio signal from the zero-power tag device includes: in response to receiving the trigger signal from the initiating positioning device, positioning the zero-power tag device based on the first radio signal from the zero-power tag device.

In the embodiments of the present disclosure, in a case where the positioning device is the intermediate device, the intermediate device may be triggered by the initiating positioning device to position the zero-power tag device based on the first radio signal from the zero-power tag device, that is, the intermediate device may perform the positioning at the time point required by the initiating positioning device, such that the process of positioning by the intermediate device matches the transmitting and receiving process of the second radio signal and the first radio signal, thus ensuring the controllability and flexibility of positioning by the intermediate device other than the initiating positioning device.

In some embodiments, the trigger signal may further be used to indicate information for the intermediate device positioning the zero-power tag device based on the first radio signal from the zero-power tag device, such as time information (a start time point, a duration, or the like), reception parameters of the first radio signal (e.g., a reception time of the first radio signal, or a frequency point), and identification of the zero-power tag device. The intermediate device may receive the first radio signal based on the reception parameters of the first radio signal and the trigger signal, and perform the positioning within the time indicated by the time information for positioning the zero-power tag device.

In some embodiments, the trigger signal may include an indicator or an indication bit (e.g., bit 0 or bit 1) indicating a start of positioning, wherein the indicator or the indication bit is used to instruct the intermediate device to start positioning.

In some embodiments, the trigger signal may be a radio signal transmitted over a sidelink, a radio signal transmitted based on an IoT protocol, or a radio signal transmitted over a cellular network. Alternatively, the trigger signal may be a radio signal transmitted based on a short-range wireless protocol such as Bluetooth or a WLAN.

In some embodiments, the trigger signal includes at least one of: a wake-up signal for waking up the positioning device, or a positioning trigger signal for triggering the positioning device to position the zero-power tag device.

In the above embodiments, the trigger signal may be used to wake up the positioning device, then the positioning device actively initiates the positioning of the zero-power tag device; or the trigger signal may be used to trigger the positioning device to start performing the process of positioning the zero-power tag device in a case where the positioning device is waked up; or the trigger signal may be used to wake up the positioning device and trigger the positioning device to start performing the process of positioning the zero-power tag device.

In some embodiments, in a case where the positioning device is the intermediate device, the positioning device may further report a positioning result of positioning the zero-power tag device to the initiating positioning device. Accordingly, the initiating positioning device receives the positioning result reported by the intermediate device (positioning device), and optionally, the initiating positioning device may display the positioning result.

In a case where the positioning device is the intermediate device, the positioning device may transmit the positioning result to the initiating positioning device for display, such that the initiating positioning device displays the position of the zero-power tag device relative to the positioning device, thereby ensuring the convenience of displaying the positioning result.

For example, the user triggers the smart speaker to position the remote control over the cell phone. After the smart speaker acquires the position of the remote control relative to the smart speaker using the positioning scheme described above, the smart speaker returns/reports the positioning result to the cell phone, and the cell phone displays the positioning result.

In some embodiments, in response to receiving the positioning result, the initiating positioning device may further perform other operations other than displaying the positioning result, such as reporting the positioning result to the cloud, or further determining the position of the zero-power tag device based on the positioning results of the plurality of intermediate devices. For example, the initiating positioning device determines the relative direction and distance of the zero-power tag device relative to one or more of the plurality of intermediate devices based on the direction and distance of the zero-power tag device relative to one or more of the plurality of intermediate devices reported by the plurality of intermediate devices.

The above embodiments of the present disclosure provide a solution for positioning the zero-power tag device, which can be widely used in smart home, industrial production, commercial services and other scenarios to realize object seeking and wayfinding functions based on the positioning of zero-power tag devices. Because the zero-power tag device has a lower cost, easy to deploy and other characteristics, and the zero-power tag device may be directly connected to the cell phone or other devices, a flexible network topology may be built. For example, in the home scenario, positioning may be realized based on an intelligent gateway, an IoT node device, and a positioning method based on the signal strength or the phase.

In some embodiments, the method for positioning zero-power tag device according to the embodiments of the present disclosure may provide a flexible and economical position-finding solution for scenarios such as smart homes and shopping malls. Based on the flexible deployment of home network nodes, the corresponding positioning energy supply and process are selected, which is easy to be deployed and promoted. The above method mainly includes the following schemes.
1) The initiating positioning device, such as a mobile phone, a tablet, or a customer premises equipment (CPE) directly initiates the positioning process, including:
   Signal transmission on the positioning device:
   One approach includes that: the initiating positioning device (such as a mobile phone or a tablet/CPE) transmits carrier signal 1 to energize the zero-power tag device and/or provide a reflected carrier, triggering a target zero-power tag device to be positioned to transmit signal 2 in a case where conditions for active transmitting signals or reflecting signals are met. The carrier signal 1 may be transmitted consecutively or periodically, the signal 2 may be reflected consecutively or periodically, or the signal 2 may be transmitted once or a plurality of times within a duration after a response. The conditions for active transmission or reflection may include: sufficient energy supply to the zero-power tag device, sufficient energy supply for backscatter, a radio signal for energization or triggering backscatter meeting certain conditions (for example, the radio signal for energization or triggering backscatter is used to trigger the zero-power tag device to transmit a radio signal for positioning, or parameters such as a frequency of the radio signal for energization or triggering backscatter meet certain conditions), or the like. The conditions for active transmission or reflection are not limited in the present disclosure.

Another approach includes that: the initiating positioning device (e.g., a mobile phone or a tablet/CPE) transmits different carrier signals A1 to An to energize the zero-power tag device and/or provide reflected carrier waves, triggering the target zero-power tag device to transmit signals B1 to Bn in a case where the requirements for active transmitting or reflecting signals are met. The carrier signals A1 to An may be transmitted in a sequential manner, at different frequencies, or at different periods. Different zero-power tag devices may have specific requirements on the carrier signal frequency, thus actively transmits or reflects signals B1 to Bn at corresponding frequencies.

### Signal reception on the positioning device:

The initiating positioning device (e.g., a mobile phone or a tablet/CPE) receives signal 2 or signals B1 to Bn, and calculates the position of the target zero-power tag device. Positioning methods are not limited to ranging methods based on the signal strength, angle measurement methods based on the signal angles of arrival and the signal angles of departure, positioning methods based on the signal phase difference, or positioning methods based on the signal time difference of arrival.

For example, a fixed initiating positioning device detects received signal 2 or signals B1 to Bn, compares the frequencies and/or intensities of the received signals, determines the distance, and acquires coordinates or a relative position of a target tag. Alternatively, in a case where a tag actively transmits or reflects two signals of different frequencies, the positioning device measures the phase difference between the two signals and calculates a phase position of the target tag.

For example, for mobile devices, positioning methods, in addition to those supported by the fixed intermediate devices, may further include machine vision positioning (e.g., SLAM), inertial navigation, or other fusion positioning algorithms. The relative position of the target tag may be determined by combining and processing measurement results at different positions.

2) The initiating positioning device (e.g., a mobile phone or a tablet/CPE) initiates the positioning process over an intermediate device (e.g., a home gateway or a smart speaker), including:

### Positioning request/wake-up:

The initiating positioning device may wake up the communication module (e.g., a Wi-Fi module) of the intermediate device (e.g., a fixed or moveable refrigerator, TV, robot vacuum, smart speaker, or the like), or wake up a repeater or a relay device. The intermediate device participates in at least one of the processes of transmitting the carrier signal, measuring the positioning signal, or calculating and processing the positioning signal.

### Carrier signal transmission:

One approach includes that: the initiating positioning device (e.g., a mobile phone or a tablet/CPE) or one intermediate device transmits carrier signal 1, wherein the carrier signal 1 is used to energize the zero-power tag device and/or provide a reflected carrier wave, triggering the target zero-power tag device to be positioned to transmit signal 2 in a case where the conditions for active transmitting or reflecting signals are met. The carrier signal 1 may be transmitted consecutively or periodically, and the signal 2 may be reflected consecutively or periodically. The signal 2 may be transmitted once or a plurality of times within a duration after the response.

Another approach includes that: different devices in the initiating positioning device and at least one intermediate device respectively transmits their own carrier signals A1 to An to supply energy the zero-power tag device and/or provide reflected carrier waves, triggering the target zero-power tag device to transmit signals B1 to Bn in a case where the requirements for active transmitting or reflecting signals are met. The carrier signals A1 to An may be transmitted consecutively or periodically, the signal 2 may be reflected consecutively or periodically, and the signals B1 to Bn may be transmitted once or a plurality of times within a duration after the response.

### Positioning signal reception:

The intermediate device receives the signal 2 and calculates the position of the target tag device based on positioning. Then, the position may be fed back to the mobile phone or tablet over a gateway or directly. For fixed intermediate devices, positioning methods are not limited to ranging methods based on the signal strength, angle measurement methods based on the signal angles of arrival and the signal angles of departure, positioning methods based on the signal phase difference, or positioning methods based on the signal time difference of arrival. A plurality of fixed intermediate devices may be considered as time-synchronized (wired connection) and may perform multi-point joint positioning. For moveable intermediate devices, in addition to the positioning methods supported by the fixed intermediate devices, positioning methods may further include machine vision positioning (e.g., SLAM), inertial navigation, or other fusion positioning algorithms.

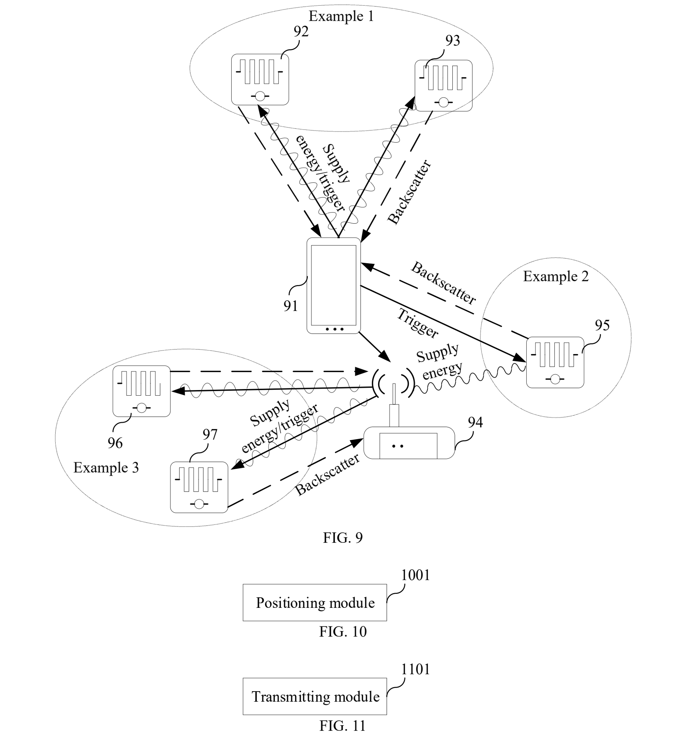

For example, using a smart home scenario as an example, FIG. 9 illustrates a framework diagram for mobile phone-initiated positioning.

As illustrated in FIG. 9, in one scenario, a mobile phone 91 may autonomously initiate positioning. For example, in FIG. 9, the mobile phone 91 supplies energy/provides directional scattering to zero-power tag devices 92 and 93 using a second radio signal, and simultaneously triggers the zero-power tag devices 92 and 93 to transmit a radio signal for positioning. The zero-power tag devices 92 and 93 transmit a first radio signal in a case of being energized by the second radio signal or directionally scattering the second radio signal. The mobile phone positions the zero-power tag devices 92 and 93 based on the received information of the first radio signal from the zero-power tag devices 92 and 93. During this process, the mobile phone may perform the positioning in combination with its own position, thus improving positioning accuracy. This scheme corresponds to example 1 in FIG. 9.

Alternatively, in the positioning scheme where the mobile phone 91 autonomously initiates the positioning, the mobile phone 91 may trigger the intermediate device (e.g., the intermediate device 94 in FIG. 9 ) to transmit a second radio signal and simultaneously transmit a third radio signal to the zero-power tag device 95. The third radio signal is used to instruct the zero-power tag device 95, in response to receiving the second radio signal, to transmit the first radio signal in a case of being energized by the second radio signal, or to backscatter the second radio signal to transmit the first radio signal. The mobile phone then positions the zero-power tag device 95 based on the reception information of the first radio signal from the zero-power tag device 95. During this process, the mobile phone may perform the positioning in combination with its own position information, thus improving positioning accuracy. This scheme corresponds to example 2 in FIG. 9 .

As illustrated in FIG. 9 , in another scenario, the mobile phone 91 may wake up the intermediate device (e.g., the intermediate device 94 in FIG. 9, which may be a moveable intermediate device, such as a robot vacuum, or a fixed intermediate device, such as a smart speaker) to initiate positioning. For example, in FIG. 9, a mobile phone wakes up the intermediate device 94 using a trigger signal. The intermediate device 94 then uses a second radio signal to supply energy/provide directional scattering to zero-power tag devices 96 and 97, and triggers the zero-power tag devices 96 and 97 to transmit a radio signal for positioning. The zero-power tag devices 96 and 97 transmit a first radio signal in a case of being energized by the second radio signal or directionally scattering the second radio signal. The intermediate device 94 then positions the zero-power tag devices 96 and 97 based on the received information of the first radio signals from the zero-power tag devices 96 and 97. During this process, in a case where the intermediate device 94 is moveable, the intermediate device 94 may perform the positioning in combination with its own position information, thereby improving positioning accuracy. Upon completion of positioning or during positioning, the intermediate device 94 reports the positioning results to the mobile phone 91. This scheme corresponds to example 3 in FIG. 9.

As illustrated in FIG. 9, in another scenario, the mobile phone 91 may wake up one or more intermediate devices (illustrated as the intermediate device 94 in FIG. 9, wherein optionally, more intermediate devices are included), and initiate the positioning together with one or more intermediate devices. For example, in FIG. 9, the mobile phone 91 supplies energy/provides directional scattering to the zero-power tag devices 92 and 93 using the second radio signal, and simultaneously triggers the zero-power tag devices 92 and 93 to transmit radio signals for positioning. The zero-power tag devices 92 and 93 transmit the first radio signal in a case of being energized by the second radio signal or directionally scattering the second radio signal. At the same time, the mobile phone 91 also wakes up the intermediate device 94 using the trigger signal. The intermediate device 94 supplies energy/provides directional scattering to the zero-power tag devices 96 and 97 using the second radio signal, and simultaneously triggers the zero-power tag devices 96 and 97 to transmit radio signals for positioning. The zero-power tag devices 96 and 97 transmit the first radio signal in a case of being energized by the second radio signal or directionally scattering the second radio signal. Then, the mobile phone 91 positions the zero-power tag devices 92 and 93 based on the received information of the first radio signals from the zero-power tag devices 92 and 93. Simultaneously, the intermediate device 94 positions the zero-power tag devices 96 and 97 based on the received information of the first radio signals from the zero-power tag devices 96 and 97, and reports the positioning results to mobile phone 91. This solution corresponds to examples 1 and 3 in FIG. 9.

FIG. 10 illustrates a block diagram of a positioning apparatus according to some embodiments of the present disclosure. The positioning apparatus implements the functions performed by the positioning device in the method illustrated in FIG. 6 or FIG. 8. As illustrated in FIG. 10, the apparatus may include a positioning module 1001.

The positioning module 1001 is configured to position a zero-power tag device based on a first radio signal from the zero-power tag device; wherein the first radio signal is actively transmitted by the zero-power tag device in response to the zero-power tag device receiving a second radio signal, or the first radio signal is passively transmitted via backscatter modulation on the second radio signal; and the second radio signal is used to energize the zero-power tag device or wake up the zero-power tag device.

In some embodiments, the second radio signal is further used to trigger the zero-power tag device to transmit the first radio signal; or the first radio signal is transmitted in a case where the zero-power tag device receives a third radio signal for triggering transmission of the first radio signal, and receives energy from the second radio signal and/or backscatters the second radio signal.

In some embodiments, a device for transmitting the second radio signal includes at least one of: a positioning device, at least one device for transmitting radio signals other than the positioning device, or the positioning device and at least one device for transmitting radio signals other than the positioning device.

In some embodiments, a positioning device is an initiating positioning device, wherein the initiating positioning device is configured to initiate positioning of the zero-power tag device; or a positioning device is one of at least one intermediate device, wherein the intermediate device is configured to assist an initiating positioning device in positioning the zero-power tag device, wherein the initiating positioning device is configured to initiate positioning of the zero-power tag device.

In some embodiments, the second radio signal includes: a first carrier signal or a plurality of second carrier signals; wherein the plurality of the second carrier signals are transmitted by a same device, or the plurality of the second carrier signals are respectively transmitted by a plurality of devices.

In some embodiments, the plurality of second carrier signals differ in at least one of: a transmission time, a frequency, or a transmission period.

In some embodiments, the first radio signal includes at least one of: a single third carrier signal or a plurality of fourth carrier signals; wherein the plurality of fourth carrier signals are transmitted consecutively, or the plurality of fourth carrier signals are transmitted periodically.

In some embodiments, the plurality of fourth carrier signals have different frequencies.

In some embodiments, in a case where the positioning device is the intermediate device, the positioning module is configured to position the zero-power tag device based on the first radio signal from the zero-power tag device in response to receiving a trigger signal from an initiating positioning device.

In some embodiments, the apparatus further includes: a reporting module, configured to report a positioning result of positioning the zero-power tag device to the initiating positioning device.

In some embodiments, a trigger signal includes at least one of: a wake-up signal for waking up the positioning device, or a positioning trigger signal for triggering the positioning device to position the zero-power tag device.

In some embodiments, the apparatus further includes: a receiving module, configured to receive the first radio signal from the zero-power tag device.

In some embodiments, the positioning module is configured to calculate a relative position between the zero-power tag device and the positioning device based on the first radio signal from the zero-power tag device and a predetermined positioning algorithm.

In some embodiments, the positioning algorithm includes at least one of: a ranging algorithm based on a signal strength, an angle measurement algorithm based on a signal angle of arrival and a signal angle of departure, a positioning algorithm based on a signal phase difference, or a positioning algorithm based on a signal time difference of arrival.

In some embodiments, the positioning module is configured to calculate the relative position between the zero-power tag device and the positioning device based on the first radio signal, the positioning algorithm, and position information of the positioning device.

In some embodiments, the position information of the positioning device is acquired based on at least one of: a machine vision positioning algorithm or an inertial navigation positioning algorithm.

In some embodiments, the first radio signal and/or the second radio signal are radio signals transmitted over sidelink communication.

FIG. 11 illustrates a block diagram of a positioning apparatus according to some embodiments of the present disclosure. The positioning apparatus implements the functions performed by the positioning device in the method illustrated in FIG. 7 or FIG. 8. As illustrated in FIG. 11, the apparatus may include a transmitting module 1101.

The transmitting module 1101 is configured to, in response to receiving a second radio signal, actively transmit a first radio signal, or passively transmit the first radio signal via backscatter modulation on the second radio signal; wherein the first radio signal is configured for a positioning device to position a zero-power tag device, and the second radio signal is used to energize the zero-power tag device or wake up the zero-power tag device.

In some embodiments, the second radio signal is further used to trigger the zero-power tag device to transmit the first radio signal; or the first radio signal is transmitted in a case where the zero-power tag device receives a third radio signal for triggering transmission of the first radio signal, and receives energy from the second radio signal and/or backscatters the second radio signal.

In some embodiments, a device for transmitting the second radio signal includes at least one of: the positioning device, at least one device for transmitting radio signals other than the positioning device, or the positioning device and at least one device for transmitting radio signals other than the positioning device.

In some embodiments, the positioning device is an initiating positioning device, wherein the initiating positioning device is configured to initiate positioning of the zero-power tag device; or the positioning device is one of at least one intermediate device, wherein the intermediate device is configured to assist an initiating positioning device in positioning the zero-power tag device, wherein the initiating positioning device is configured to initiate positioning of the zero-power tag device.

In some embodiments, the second radio signal includes a first carrier signal or a plurality of second carrier signals; wherein the plurality of the second carrier signals are transmitted by a same device, or the plurality of the second carrier signals are respectively transmitted by a plurality of devices.

In some embodiments, the plurality of second carrier signals differ in at least one of: a transmission time, a frequency, or a transmission period.

In some embodiments, the first radio signal includes at least one of a single third carrier signal or a plurality of fourth carrier signals; wherein the plurality of fourth carrier signals are transmitted consecutively, or the plurality of fourth carrier signals are transmitted periodically.

In some embodiments, the plurality of fourth carrier signals have different frequencies.

In some embodiments, the first radio signal and/or the second radio signal are radio signals transmitted over sidelink communication.

It should be noted that the apparatuses according to the above embodiments are merely illustrated by the division of the above functional modules when implementing their functions. In practice, the above functions may be assigned to different functional modules based on actual needs, that is, the content structures of the apparatuses may be divided into different functional modules to complete all or part of the functions described above.

Regarding the apparatuses in the above embodiments, the specific manner in which each module performs operations has been described in detail in the method embodiments and will not be elaborated herein.

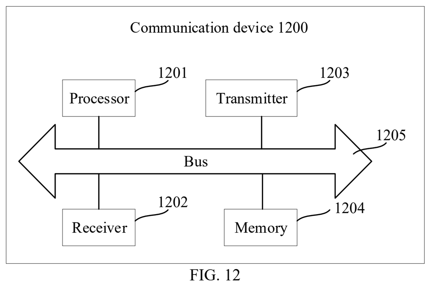

FIG. 12 is a schematic structural diagram of a communication device 1200 according to some embodiments of the present disclosure. The communication device 1200 may include a processor 1201, a receiver 1202, a transmitter 1203, a memory 1204, and a bus 1205.

The processor 1201 includes one or more processing cores, and achieves various functional applications and information processing by running software programs and modules.

The receiver 1202 and the transmitter 1203 may be implemented as a communication assembly. The communication assembly may be a communication chip. The communication chip may be referred to as a transceiver. The memory 1204 is communicably connected to the processor 1201 over the bus 1205. The memory 1204 is configured to store a computer program, and the processor 1201 is configured to run the computer program to perform various processes in the above method embodiments.

In addition, the memory 1204 may be implemented by any type or combination of volatile or non-volatile storage devices including, but not limited to: magnetic or optical disks, electrically-erasable programmable read-only memories (EEPROMs), erasable programmable read-only memories (EPROMs), static random-access memories (SRAMs), read-only memories (ROMs), magnetic memories, flash memories, and programmable read-only memories (PROMs).

In some embodiments, in a case where the communication device 1200 is implemented as the positioning device, the receiver 1202 and the processor 1201 run the computer program to cause the communication device to perform the processes performed by the positioning device in the method illustrated in FIG. 6 or FIG. 8.

In some embodiments, in a case where the communication device 1200 is implemented as the zero-power tag device, the transmitter 1203 runs the computer program to cause the communication device to perform the processes performed by the zero-power tag device in the method illustrated in FIG. 7 or FIG. 8.

Some embodiments of the present disclosure provide a computer-readable storage medium. The storage medium stores a computer program. The computer program, when loaded and run by a processor, causes the processor to perform all or part of the processes performed by a positioning device or a zero-power tag device in the methods illustrated in FIG. 6, FIG. 7, or FIG. 8.

Some embodiments of the present disclosure provide a chip. The chip is configured to, when running on a communication device, cause the communication device to perform all or part of the processes performed by a positioning device or a zero-power tag device in the methods illustrated in FIG. 6, FIG. 7, or FIG. 8.

Some embodiments of the present disclosure provide a computer program product. The computer program product or a computer program includes one or more computer instructions stored in a computer-readable storage medium. A processor of a communication device reads the one or more computer instructions from the computer-readable storage medium and executes the computer instructions, causing the communication device to perform all or part of the processes performed by a positioning device or a zero-power tag device in the methods illustrated in FIG. 6, FIG. 7, or FIG. 8.

Some embodiments of the present disclosure provide a computer program. The computer program when executed by a processor of a communication device, causes the processor to perform all or part of the processes performed by a positioning device or a zero-power tag device in the methods illustrated in FIG. 6, FIG. 7, or FIG. 8.

A person skilled in the art shall appreciate that in the foregoing one or more examples, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are optional embodiments of the present disclosure, but not intended to limit the present disclosure. Any modifications, equivalent replacements, improvements and the like made within the spirit and principles of the present disclosure should be encompassed within the scope of protection of the present disclosure.

## Claims

1. A positioning method, performed by a positioning device, the method comprising:
positioning a zero-power tag device based on a first radio signal from the zero-power tag device; wherein the first radio signal is actively transmitted by the zero-power tag device in response to the zero-power tag device receiving a second radio signal, or the first radio signal is passively transmitted via backscatter modulation on the second radio signal; wherein the second radio signal is used to energize the zero-power tag device or wake up the zero-power tag device.

2. The method according to claim **1,** wherein
the second radio signal is further used to trigger the zero-power tag device to transmit the first radio signal; or
the first radio signal is transmitted in a case where the zero-power tag device receives a third radio signal for triggering transmission of the first radio signal, and receives energy from the second radio signal and/or backscatters the second radio signal.

3. The method according to claim 1 or 2, wherein the second radio signal is transmitted by at least one of:
the positioning device;
at least one device for transmitting radio signals other than the positioning device; or
the positioning device, and at least one device for transmitting radio signals other than the positioning device.

4. The method according to any one of claims 1 to 3, wherein
the positioning device is an initiating positioning device, wherein the initiating positioning device is configured to initiate positioning of the zero-power tag device; or
the positioning device is one of at least one intermediate device, wherein the intermediate device is configured to assist an initiating positioning device in positioning the zero-power tag device, the initiating positioning device being configured to initiate positioning of the zero-power tag device.

5. The method according to any one of claims 1 to 4, wherein the second radio signal comprises:
a first carrier signal or a plurality of second carrier signals;
wherein the plurality of the second carrier signals are transmitted by a same device, or the plurality of the second carrier signals are respectively transmitted by a plurality of devices.

6. The method according to claim 5, wherein the plurality of second carrier signals differ in at least one of:
a transmission time, a frequency, or a transmission period.

7. The method according to any one of claims 1 to 6, wherein the first radio signal comprises at least one of:
a single third carrier signal or a plurality of fourth carrier signals;
wherein the plurality of fourth carrier signals are transmitted consecutively, or the plurality of fourth carrier signals are transmitted periodically.

8. The method according to claim 7, wherein the plurality of fourth carrier signals have different frequencies.

9. The method according to claim 4, wherein in a case where the positioning device is the intermediate device, positioning the zero-power tag device based on the first radio signal from the zero-power tag device comprises:
in response to receiving a trigger signal from an initiating positioning device, positioning the zero-power tag device based on the first radio signal from the zero-power tag device.

10. The method according to claim 9, further comprising:
reporting a positioning result of positioning the zero-power tag device to the initiating positioning device.

11. The method according to claim 9 or 10, wherein the trigger signal comprises at least one of:
a wake-up signal for waking up the positioning device; or
a positioning trigger signal for triggering the positioning device to position the zero-power tag device.

12. The method according to any one of claims 1 to 11, further comprising:
receiving the first radio signal from the zero-power tag device.

13. The method according to any one of claims 1 to 12, wherein positioning the zero-power tag device based on the first radio signal from the zero-power tag device comprises:
calculating a relative position between the zero-power tag device and the positioning device based on the first radio signal from the zero-power tag device and a predetermined positioning algorithm.

14. The method according to claim 13, wherein the positioning algorithm comprises at least one of:
a ranging algorithm based on a signal strength;
an angle measurement algorithm based on a signal angle of arrival and a signal angle of departure;
a positioning algorithm based on a signal phase difference; or
a positioning algorithm based on a signal time difference of arrival.

15. The method according to claim 13 or 14, wherein calculating the relative position between the zero-power tag device and the positioning device based on the first radio signal from the zero-power tag device and the predetermined positioning algorithm comprises:
calculating the relative position between the zero-power tag device and the positioning device based on the first radio signal, the positioning algorithm, and position information of the positioning device.

16. The method according to claim 15, wherein the position information of the positioning device is acquired based on at least one of:
a machine vision positioning algorithm; or
an inertial navigation positioning algorithm.

17. The method according to any one of claims 1 to 16, wherein at least one of the first radio signal or the second radio signal is a radio signal transmitted over sidelink communication.

18. A positioning method, performed by a zero-power tag device, the method comprising:
in response to receiving a second radio signal, actively transmitting a first radio signal, or passively transmitting the first radio signal via backscatter modulation on the second radio signal; wherein the first radio signal is configured for a positioning device to position the zero-power tag device, and the second radio signal is used to energize to the zero-power tag device or wake up the zero-power tag device.

19. The method according to claim 18, wherein
the second radio signal is further used to trigger the zero-power tag device to transmit the first radio signal; or
the first radio signal is transmitted in a case where the zero-power tag device receives a third radio signal for triggering transmission of the first radio signal, and receives energy from the second radio signal and/or backscatters the second radio signal.

20. The method according to claim 18 or 19, wherein the second radio signal is transmitted by at least one of:
the positioning device;
at least one device for transmitting radio signals other than the positioning device; or
the positioning device, and at least one device for transmitting radio signals other than the positioning device.

21. The method according to any one of claims 18 to 20, wherein
the positioning device is an initiating positioning device, wherein the initiating positioning device is configured to initiate positioning of the zero-power tag device; or
the positioning device is one of at least one intermediate device, wherein the intermediate device is configured to assist an initiating positioning device in positioning the zero-power tag device, the initiating positioning device being configured to initiate positioning of the zero-power tag device.

22. The method according to any one of claims 18 to 21, wherein the second radio signal comprises:
a first carrier signal or a plurality of second carrier signals;
wherein the plurality of the second carrier signals are transmitted by a same device, or the plurality of the second carrier signals are respectively transmitted by a plurality of devices.

23. The method according to claim 22, wherein the plurality of second carrier signals differ in at least one of:
a transmission time, a frequency, or a transmission period.

24. The method according to any one of claims 18 to 23, wherein the first radio signal comprises at least one of:
a single third carrier signal or a plurality of fourth carrier signals;
wherein the plurality of fourth carrier signals are transmitted consecutively, or the plurality of fourth carrier signals are transmitted periodically.

25. The method according to claim 24, wherein the plurality of fourth carrier signals have different frequencies.

26. The method according to any one of claims 18 to 25, wherein at least one of the first radio signal or the second radio signal is a radio signal transmitted over sidelink communication.

27. A positioning apparatus, comprising:
a positioning module, configured to position a zero-power tag device based on a first radio signal from the zero-power tag device; wherein the first radio signal is actively transmitted by the zero-power tag device in response to the zero-power tag device receiving a second radio signal, or the first radio signal is passively transmitted via backscatter modulation on the second radio signal; wherein the second radio signal is used to energize the zero-power tag device or wake up the zero-power tag device.

28. The apparatus according to claim 27, wherein
the second radio signal is further used to trigger the zero-power tag device to transmit the first radio signal; or
the first radio signal is transmitted in a case where the zero-power tag device receives a third radio signal for triggering transmission of the first radio signal, and receives energy from the second radio signal and/or backscatters the second radio signal.

29. The apparatus according to claim 27 or 28, wherein the second radio signal is transmitted by at least one of:
a positioning device;
at least one device for transmitting radio signals other than the positioning device; or
the positioning device, and at least one device for transmitting radio signals other than the positioning device.

30. The apparatus according to any one of claims 27 to 29, wherein
a positioning device is an initiating positioning device, wherein the initiating positioning device is configured to initiate positioning of the zero-power tag device; or
a positioning device is one of at least one intermediate device, wherein the intermediate device is configured to assist an initiating positioning device in positioning the zero-power tag device, the initiating positioning device being configured to initiate positioning of the zero-power tag device.

31. The apparatus according to any one of claims 27 to 30, wherein the second radio signal comprises:
a first carrier signal or a plurality of second carrier signals;
wherein the plurality of the second carrier signals are transmitted by a same device, or the plurality of the second carrier signals are respectively transmitted by a plurality of devices.

32. The apparatus according to claim 31, wherein the plurality of second carrier signals differ in at least one of:
a transmission time, a frequency, or a transmission period.

33. The apparatus according to any one of claims 27 to 32, wherein the first radio signal comprises at least one of:
a single third carrier signal or a plurality of fourth carrier signals;
wherein the plurality of fourth carrier signals are transmitted consecutively, or the plurality of fourth carrier signals are transmitted periodically.

34. The apparatus according to claim 33, wherein the plurality of fourth carrier signals have different frequencies.

35. The apparatus according to claim 30, wherein in a case where the positioning device is the intermediate device, the positioning module is configured to position the zero-power tag device based on the first radio signal from the zero-power tag device in response to receiving a trigger signal from the initiating positioning device.

36. The apparatus according to claim 35, further comprising:
a reporting module, configured to report a positioning result of positioning the zero-power tag device to the initiating positioning device.

37. The apparatus according to claim 34 or 36, wherein a trigger signal comprises at least one of:
a wake-up signal for waking up the positioning device; or
a positioning trigger signal for triggering the positioning device to position the zero-power tag device.

38. The apparatus according to any one of claims 27 to 37, further comprising:
a receiving module, configured to receive the first radio signal from the zero-power tag device.

39. The apparatus according to any one of claims 27 to 38, wherein the positioning module is configured to calculate a relative position between the zero-power tag device and the positioning device based on the first radio signal from the zero-power tag device and a predetermined positioning algorithm.

40. The apparatus according to claim 39, wherein the positioning algorithm comprises at least one of:
a ranging algorithm based on a signal strength;
an angle measurement algorithm based on a signal angle of arrival and a signal angle of departure;
a positioning algorithm based on a signal phase difference; or
a positioning algorithm based on a signal time difference of arrival.

41. The apparatus according to claim 39 or 40, wherein the positioning module is configured to calculate the relative position between the zero-power tag device and the positioning device based on the first radio signal, the positioning algorithm, and position information of the positioning device.

42. The apparatus according to claim 41, wherein the position information of the positioning device is acquired based on at least one of:
a machine vision positioning algorithm; or
an inertial navigation positioning algorithm.

43. The apparatus according to any one of claims 27 to 42, wherein at least one of the first radio signal or the second radio signal is a radio signal transmitted over sidelink communication.

44. A positioning apparatus, comprising:
a transmitting module, configured to, in response to receiving a second radio signal, actively transmit a first radio signal, or passively transmit the first radio signal via backscatter modulation on the second radio signal; wherein the first radio signal is configured for a positioning device to position a zero-power tag device, and the second radio signal is used to energize the zero-power tag device or wake up the zero-power tag device.

45. The apparatus according to claim 44, wherein the second radio signal is further used to trigger the zero-power tag device to transmit the first radio signal; or
the first radio signal is transmitted in a case where the zero-power tag device receives a third radio signal for triggering transmission of the first radio signal, and receives energy from the second radio signal and/or backscatters the second radio signal.

46. The apparatus according to claim 44 or 45, wherein the second radio signal is transmitted by at least one of:
the positioning device;
at least one device for transmitting radio signals other than the positioning device; or
the positioning device, and at least one device for transmitting radio signals other than the positioning device.

47. The apparatus according to any one of claims 44 to 46, wherein
the positioning device is an initiating positioning device, wherein the initiating positioning device is configured to initiate positioning of the zero-power tag device; or
the positioning device is one of at least one intermediate device, wherein the intermediate device is configured to assist an initiating positioning device in positioning the zero-power tag device, the initiating positioning device being configured to initiate positioning of the zero-power tag device.

48. The apparatus according to any one of claims 44 to 47, wherein the second radio signal comprises:
a first carrier signal or a plurality of second carrier signals;
wherein the plurality of the second carrier signals are transmitted by a same device, or the plurality of the second carrier signals are respectively transmitted by a plurality of devices.

49. The apparatus according to claim 48, wherein the plurality of second carrier signals differ in at least one of:
a transmission time, a frequency, or a transmission period.

50. The apparatus according to any one of claims 44 to 49, wherein the first radio signal comprises at least one of:
a single third carrier signal or a plurality of fourth carrier signals;
wherein the plurality of fourth carrier signals are transmitted consecutively, or the plurality of fourth carrier signals are transmitted periodically.

51. The apparatus according to claim 50, wherein the plurality of fourth carrier signals have different frequencies.

52. The apparatus according to any one of claims 44 to 51, wherein at least one of the first radio signal or the second radio signal is a radio signal transmitted over sidelink communication.

53. A positioning device, comprising: a processor, a memory, and a transceiver;
wherein the memory stores one or more computer programs, and the processor, when running the one or more computer programs, causes the positioning device to perform the positioning method as defined in any one of claims 1 to 17.

54. A zero-power tag device, comprising: a processor, a memory, and a transceiver;
wherein the memory stores one or more computer programs, and the processor, when running the one or more computer programs, causes the zero-power tag device to perform the positioning method as defined in any one of claims 18 to 26.

55. A computer-readable storage medium, storing one or more computer programs, wherein the one or more computer programs, when run by a processor of a communication device, causes the communication device to perform the positioning method as defined in any one of claims 1 to 26.

56. A chip, comprising: an integrated circuit and an application program, wherein the chip, when running on a communication device, causes the communication device to perform the positioning method as defined in any one of claims 1 to 26.

57. A computer program product, comprising: one or more computer instructions, wherein the one or more computer instructions are stored in a computer-readable storage medium, and the one or more computer instructions, when read from the computer-readable storage medium and executed by a processor of a communication device, cause the communication device to perform the positioning method as defined in any one of claims 1 to 26.

58. A computer program, wherein the computer program, when run by a processor of a communication device, causes the communication device to perform the positioning method as defined in any one of claims 1 to 26.
